# EUROPEAN PATENT APPLICATION

(11) **EP 3 330 678 A1**
(43) Date of publication of application: **06.06.2018**
(21) Application number: 16830675.1
(22) Date of filing: 04.05.2016
(51) Int. Cl.: G01F 1/06, G01D 5/34, G01P 3/36, G01P 13/00

(54) **DEVICE FOR MEASURING USAGE AMOUNT AND DETERMINING FLOW DIRECTION OF FLUID OR GAS**

(30) Priority: 28.07.2015 KR 20150106332
(71) Applicant: YPPICT CORPORATION, Seoul 08592 (KR)
(72) Inventor: PARK, Jae Sam, Incheon 22640 (KR); PARK, Joon Young, Seoul 03976 (KR)
(74) Representative: Gulde & Partner
(86) International application number: PCT/KR2016/004719
(87) International publication number: WO 2017/018642

(57) **Abstract**

A device for measuring a usage amount and determining a flow direction of fluid or gas is disclosed. For this, the present invention includes: two sensing parts including light emitting sensors and light receiving sensors which are difference from each other and, the two sensing part provided inside and outside of a blocking part to be perpendicular to each other, at least one blocking part rotating between a first light emitting sensor and a first light receiving sensor, and between a second light emitting sensor and a second light receiving sensor, and a controller counting a number of rotations of an impeller unit by using an ON/OFF signal detected from the first light receiving sensor, and determining a rotation direction of the impeller unit by using an ON/OFF signal detected from the second light receiving sensor.

## Description

### Technical Field

The present invention relates to a device for measuring a usage amount in a meter. More particularly, the present invention relates to a device for measuring a usage amount and determining a flow direction of fluid or gas, the device being capable of measuring a flowing amount of the fluid and the gas which forwardly flow and backwardly flows.

### Background Art

A flow meter, such as water flow meter, is a device measuring an amount of fluid, in other words, a flow amount, passing inside a pipe, and a gas flow meter is a device for measuring an amount of gas flowing inside of a pipe

In a conventional water meter, a permanent magnet and a reed switch are used as devices for measuring a water usage amount.

In detail, an electrical pulse is generated when a reed switch enters an ON/OFF state, and a number of rotations of an impeller unit may be measured by counting a number of pulses.

Meanwhile, in the above flow meter, a reed switch or a magnet-to-resistive (MR) sensor is operated by magnetic force, and an ON/OFF operation of the reed switch or the MR sensor may not smoothly performed when an object having by magnetic force is present nearby the switch or the sensor.

As a result, a pulse generated by the reed witch of the MR sensor is not detected due to external magnetic field. Thus, a problem of unfair use of the flow meter arises.

In order to solve the above problem, Korean Patent No. 10-1112224 (Device for measuring flow of a meter and method for the same) and Korean Patent No. 10-1382277 (Electronic gas flow meter and device for remotely transmitting usage amount) disclose a method of measuring an accurate flow amount by using an optical sensor.

In the conventional flow meter or gas flow meter, a usage amount of fluid or gas flowing in a forward direction may be measured, but when fluid or gas flows in a backwards direction, it may not be determined. In other words, it is not easy to distinguish whether a value is measured in a forward direction or backward direction.

In other words, whether an impeller unit rotates in a forward direction or in a backward direction may not be distinguished, and when fluid or gas flows in a backward direction where fluid or gas consumption does not actually occur, a flow amount thereof may calculated, and fee for fluid or gas consumption that is not consumed may be charged.

In addition, in a conventional flow meter or gas flow meter, chattering is generated by ON/OFF of a light receiving sensor at a point when fluid or gas passes from a blocking part to an opening part or from the opening part to the blocking part, thus a problem that counting suddenly increases may occur.

In addition, in a conventional flow meter or gas flow meter, an ON/OFF period of a light emitting sensor is fixed, and much battery power is consumed even when fluid or gas flows in a low speed.

### Disclosure

### Technical Problem

Accordingly, the present invention has been made keeping in mind the above problems occurring in the prior art, and a first object of the present invention is to provide a device for measuring a usage amount and determining a flow direction of fluid or gas by using two pairs of light emitting/receiving sensors.

In addition, a second object of the present invention is to provide a device for measuring a usage amount and determining a flow direction of fluid or gas, the device being capable of measuring an accurate usage amount even when fluid or gas passing the usage amount measuring device is turbid, and when chattering is generated by ON/OFF states of a light receiving sensor as the fluid or gas passes from a blocking part to an opening part or from the opening part to the blocking part.

In addition, a third object of the present invention is to provide a device for measuring a usage amount and determining a flow direction of fluid or gas, wherein power consumption of the device is reduced by using a variable pulse according to a flowing speed of fluid or gas.

### Technical Solution

In order to accomplish the above first object, the present invention provides a device for measuring a usage amount and determining a flow direction of fluid or gas, the device including: a first sensing part including a first light emitting sensor and a first light receiving sensor; a second sensing part including a second light emitting sensor and a second light receiving sensor; a body part through which gas or fluid flows thereinside, and in which the first sensing part and the second sensing part are provided in one side thereof; an impeller unit provided to rotate by fluid or gas flowing through the body part; at least one blocking part rotating in association with the rotation of the impeller unit, and rotating between the first light receiving sensor and the first light emitting sensor, and between the second light receiving sensor and the second light emitting sensor; and a controller transmitting a pulse signal to the first light emitting sensor and counting a number of rotations of the impeller unit by using an OFF/OFF signal detected from the first light receiving sensor, the an OFF/OFF signal of the first light receiving sensor being output according to whether or not a signal output from the first light emitting sensor is blocked by the rotation of the blocking part, and transmitting a pulse signal to the second light emitting sensor and determining a rotation direction by using an ON/OFF signal detected from the second light receiving sensor, the ON/OFF signal of the second light receiving sensor being output according to whether or not a signal output from the second light emitting sensor is blocked by the rotation of the blocking part.

In addition, in order to accomplish the above second object, the present invention provides a device for measuring a usage amount and determining a flow direction of fluid or gas, the device includes: a first comparing part configured to compare a signal output from the first light receiving sensor with a criterion signal, and to output a corresponding signal; and a second comparing part configured to compare a signal output from the second light receiving sensor with a criterion signal, and to output a corresponding signal. In addition, each of the comparing parts includes a Schmitt trigger circuit that feeds back the output signal of each comparing part into each criterion terminal (+ terminal) thereof such that an error generated due to chattering occurred when detecting an ON/OFF state of a light receiving sensor while fluid or gas passes between a blocking part and an opening part is removed. In addition, a number of rotations of the impeller unit may be counted according to an ON/OFF signal output from the first comparing unit, and a rotation direction of the impeller unit is determined according to an ON/OFF signal output from the second comparing unit.

In addition, in order to accomplish the above third object, in the present invention providing a device for measuring a usage amount and determining a flow direction of fluid or gas, the controller switches ON the first light emitting sensor and adjust a period for detecting whether the first light receiving sensor is an ON or OFF state to be shorter than a 1/2 of a time required for passing the first light emitting sensor and the first light receiving sensor by the blocking part according to a rotation speed of the blocking part.

### Advantageous Effects

According to a device for measuring a usage amount and determining a flow direction of fluid or gas according to the present invention described above, a number of rotations can be measured by using first light emitting/receiving sensors, and whether fluid or gas flows in a forward direction or in a backward direction can be determined by using second light emitting/receiving sensors, thus the usage amount and the flow direction of fluid or gas can be accurately detected.

In addition, according to a device for measuring a usage amount and determining a flow direction of fluid or gas of the present invention, by using a comparing part making a fine signal output from a light receiving sensor to have a hysteresis characteristic, a number of rotations and a rotation direction of an impeller unit can be accurately measured even when fluid or gas passing the measuring device is turbid, and even when it is difficult to detect a signal in the light receiving sensor at a point when the impeller unit passes from a blocking part to an opening part or when chattering is generated.

In addition, according to a device for measuring a usage amount and determining a flow direction of fluid or gas of the present invention, power consumption of the device is reduced by using a variable pulse according to a rotation speed of a blocking part.

### Description of Drawings

FIG. 1 is an exploded perspective view of a water flow meter according to an embodiment of the present invention.
FIG. 2 is a cross-sectional view of a gas flow meter according to an embodiment of the present invention.
FIG. 3 is a main configuration diagram of a device for measuring a usage amount and determining a flow direction of fluid or gas according to an embodiment of the present invention.
FIG. 4 is a view showing examples when one, three, and five blocking parts are provided.
FIGS. 5 and 6 are views for illustrating counting a number of rotations and setting a direction when one blocking part is provided and rotates in forward and backward directions.
FIGS. 7 and 8 are views for illustrating counting a number of rotations and setting a direction when three blocking parts are provided and rotate in forward and backward directions.
FIGS. 9 and 108 are views for illustrating counting a number of rotations and setting a direction when five blocking parts are provided and rotate in forward and backward directions.
FIGS. 11 to 13 are flowcharts for illustrating a method of measuring a usage amount and determining a flow direction of fluid or gas, and using a variable pulse for reducing power consumption according to an embodiment of the present invention.
FIG. 14 is a view showing a graph when an on/off period of a first light emitting sensor 211 is fixed to 16msec.
FIG. 15 is a reference view showing when an ON/OFF period of the first light emitting sensor is set to 16msec and a fluid speed is 2500 liter/hour, and an ON/OFF period is adjusted to 250msec when the fluid speed becomes close to 0.

### Mode for Invention

The terms or words used in the following description and the claims are not limited to conventional or dictionary meanings and should be interpreted as having meanings and definitions suitable for the technical sprit of the invention based on a principle that the inventor(s) may suitably define terms to describe the invention in a best mode.

In this disclosure, if a prescribed part "includes" a certain component, it means not to exclude a different component but to further include the different component unless there is a specific opponent comment. Moreover, such terminologies written in the present specification as "unit", "module", and the like indicate a unit processing at least one or more functions or operations and these functions or operations can be implemented by hardware, software or a combination thereof.

In this disclosure, terms such as "first" and "second" are used to distinguish one element from the other element, and the scope should not be limited to the terms. For example, a first element can be named a second element. Likewise, a second element can be named a first element.

In each step, identification symbols (for example, light emitting, light receiving, c, ...) are not intended to describe the order of steps but are used for convenience of description, and the steps may be performed in an order different from the described order unless the specified order is clearly stated in context. That is, the steps may be performed in the described order, substantially at the same time, or in reverse order to the described order.

Hereinafter, an embodiment of the present invention will be described with reference to the drawings.

First, a device for measuring a usage amount and determining a flow direction of fluid and gas includes: a body part in which fluid or gas flows thereinside; an impeller unit installed to rotate by fluid or gas flowing in the body part; a blocking part rotating in association with the rotation of the impeller unit; light receiving/emitting sensors for measuring a flow amount and light receiving/emitting sensors for detecting a rotation direction. The two pairs of sensors are provided inside and outside of the blocking part.

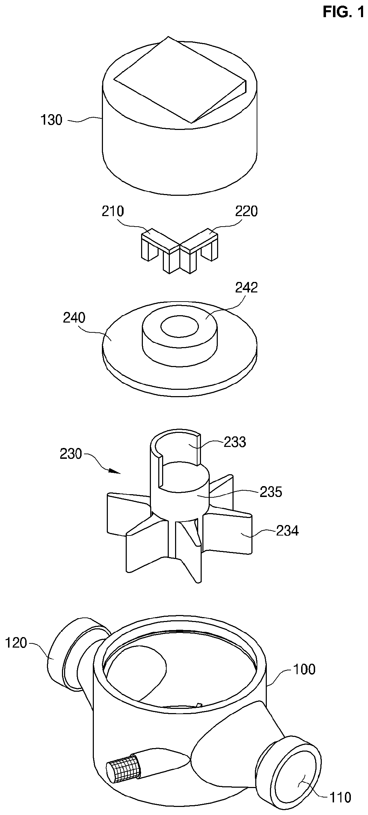

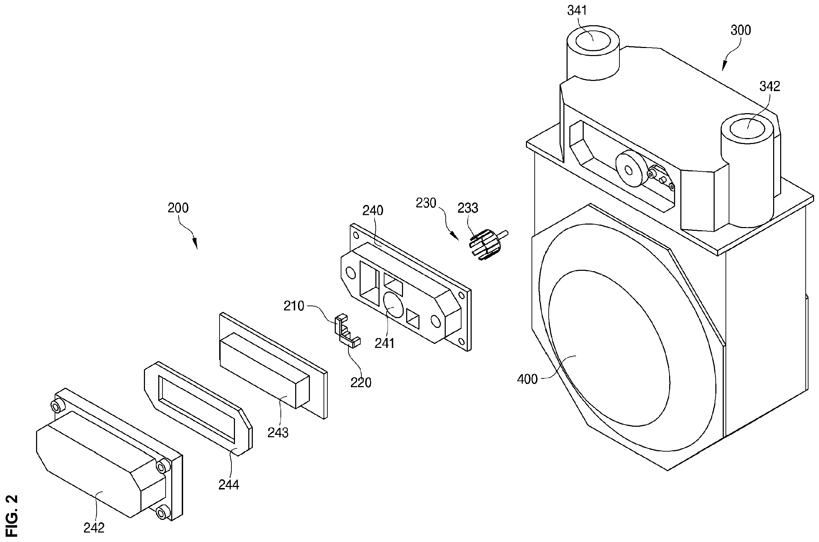

For this, first, with reference to an exploded perspective view of a water flow meter of FIG. 1, a method of measuring a flow amount and detecting a rotation in the water meter will be described. A method of measuring a flow amount and detecting a rotation in a gas flow meter will be described with reference to a cross-sectional view of a gas flow meter of FIG. 2.

First, referring to FIG. 1, the impeller unit 230 is rotatably installed inside a lower housing 100, and rotates by fluid flowing fluid paths 110 and 120. Herein, the blocking part 233 is provided in an upper part of the impeller unit 230, and rotates based on a rotation axis of a vertical direction in the figure.

In detail, as shown in the figure, the water flow meter may include a lower housing 100 formed with a storage space thereinside, and the water flow meter may be configured to measure a flow amount and a rotation direction as the impeller unit 230 rotates by fluid (for example, water) inflowing from an inlet part 110 provided in a first side of the lower housing 100, passing through the lower housing 100, and outflowing to outside through an outlet part 120.

For this, a first sensing part 210 and a second sensing part 220 which are configured with transmitting/receiving sensors different from each other, and a partition plate 240 covering an opened upper surface of the lower housing 100 may be included.

The partition plate 240 according to an embodiment of the present invention may be formed with a guide hole 241 to which the blocking part 233 is inserted. The guide hole 241 may be formed to be rounded to have a curvature identical to a curvature of the blocking part 233 so that the blocking part 233 is completely inserted thereinto.

In addition, the guide hole 241 may be formed to have a cylinder shape so that the blocking part 233 rotates thereinside. The blocking part 233 may be inserted into a lower part of the partition plate 240 through the guide hole 241.

Meanwhile, the guide hole 241 may be formed to be larger than the blocking part 233 so that the impeller unit 230 or the blocking part 233 does not interfere with the partition plate 240.

The partition plate 240 may be formed of a transparent material so that signals (for example, optical signals) emitted from light emitting sensors 211 and 221 are received by light receiving sensor 212 and 222.

The first and second sensing parts 210 and 220 are respectively configured with light emitting sensors 211 and 221 and light receiving sensors 212 and 222, the light emitting sensor is a light emitting diode (LED) transmitting an optical signal, and the light receiving sensor is a phototransistor that receives an optical signal.

In an upper housing 130, a sensor storage part (not shown) storing the respective first and second sensing parts 210 and 220 may be provided.

In the lower housing 100, an impeller inserting part into which the impeller unit 230 is inserted may be formed, and sealing member for preventing fluid flowing inside the lower housing 100 from leaking to outside may be provided in outside of the partition plate 240.

The impeller unit 230 is inserted into the lower housing 100 and provided in a lower part thereof, and includes a plurality of blades 234 generating rotation force by being interfered with by fluid flowing inside the lower housing 100, and an impeller body 235 forming a rotation axis of the blades 234. The blocking part 233 is formed to upwardly extend from an upper part of the impeller body 235.

The blocking part 233 is coupled to a border of an upper surface of the impeller body 235, and is formed to be rounded to have a curvature identical to a curvature of the impeller body 235. In other words, the blocking part 233 may be formed in a form that a part of an outer circumference surface of the impeller body 235 upwardly extends.

The blocking part 233 is formed to upwardly extend from a border corresponding to about a half circumference of the upper surface of the impeller body 235. In other word, when an upper surface of the impeller body 235 has a 360 degree circular form based on an axis 236, the blocking part 233 is formed on the upper surface of the impeller body 235 and which corresponds to a part about 180 degrees.

By the above configuration, when fluid flows from the inlet part 110 to the outlet part 120, the blades 234 are interfered with by fluid so that the impeller body 235, the blades 234, and the blocking part 233 rotate based on the axis.

When the impeller unit 230 rotates, signals transmitted from respective light emitting sensors 211 and 221 are selectively received by respective light receiving sensors 212 and 222.

The above operations of the sensors will be described in below.

FIG. 2 is a cross-sectional view of a gas flow meter according to an embodiment of the present invention. The gas flow meter includes an upper casing 300 formed with a body part in which gas inlet part and output part 341 and 342 are provided, and a lower casing 400.

In the upper casing 300, the inlet part 341 for gas inflow, and the outlet part 342 for gas discharge, and a counting part 200 provided in one side of the upper casing 300 for measuring inflowing and outflowing gas are provided for the measurement.

In the lower casing 400, a diaphragm assembly is provided in left and right sides of the lower casing 400 as a means for pumping inflowing gas is provided, and in the upper casing 300, a rotary slider including a valve assembly that rotates by the pumping of the diaphragm assembly and controls a gas flow flowing into or outflowing from the diaphragm assembly may be provided.

The above described upper casing and lower casing are common configurations, thus descriptions thereof are omitted.

The counting part 200 is provided in one side of the upper casing 300 to measure inflowing and outflowing gas.

An internal cover 240 covers the impeller unit 230 that is provided in one side of the upper casing 300 and configured to be rotatably coupled with the rotary slider. In addition, the internal casing 240 is formed to be spaced apart from the guide hole 241 based on a rotation axis of the impeller unit 230 so that the impeller unit 230 may rotate, and is coupled with the upper casing 300 so that gas tightness is maintained.

An external cover 242 includes a display part 243 thereinside which displays a gas amount of inflowing and outflowing gas calculated by counting a number of rotations of the impeller unit 230.

In the above gas flow meter, the impeller unit 230 rotates by gas flowing in the diaphragm, and the blocking part 233 is provided in a rotation axis so that the blocking part 233 rotates with the rotation axis according to the gas flow.

For this, a first sensing part 210 and a second sensing part 220 which are configured with transmitting/receiving sensors different from each other are respectively configured with light emitting sensors and light receiving sensors. The light emitting sensor is a light emitting diode (LED) transmitting an optical signal, and the light receiving sensor is a phototransistor that receives an optical signal.

The first sensing part 210 is provided with a first light emitting sensor 211 and a first light receiving sensor 212, and the second sensing part 220 is also provided with a second light emitting sensor 221 and a second light receiving sensor 222. The first sensing part 210 and the second sensing part 220 are configured to be perpendicular.

The blocking part 233 is coupled on a border of an upper surface of the impeller body having a circular form, and is formed to be rounded to have a curvature identical to a curvature of the impeller body. In other words, the blocking part 233 may be formed in a form that a part of an outer circumference surface of the impeller body 235 upwardly extends.

Hereinafter, an operation of a sensor of a water flow meter and a gas flow meter (hereinafter, meter) will be described with reference to the figure.

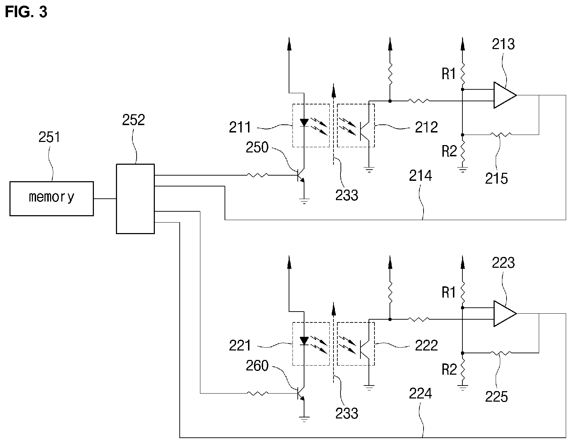

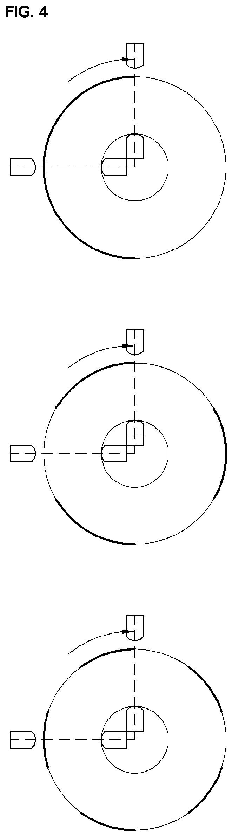

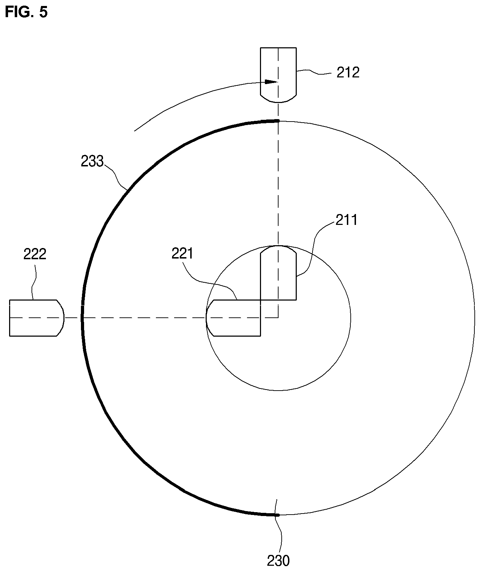

FIG. 3 is a main configuration diagram of a device for measuring a usage amount and determining a flow direction of fluid or gas according to an embodiment of the present invention, and FIGS. 4 and 5 are views for illustrating a method of counting a number of rotations and setting a direction when one blocking part is provided and the blocking part rotates in forward and backward directions.

Referring to FIG. 3, the device for measuring the usage amount and determining the flow direction of fluid or gas includes: a first light emitting sensor 211 and a first light receiving sensor 212 provided in a first sensing part 210; a second light emitting sensor 221 and a second light receiving sensor 222 provided in a second sensing part 220; a first switch 250 being selectively switched ON/OFF for transmitting a signal to the first light emitting sensor 211; a second switch 260 being selectively switched ON/OFF for transmitting a signal to the second light emitting sensor 221; a controller 252 outputting a signal for switching ON/OFF the switches 250 and 260, a memory 251 storing switched ON/OFF information of the sensor; a first comparing part 213 configured to compare a signal output from the first light receiving sensor 212 with a criterion signal, and to output a corresponding signal; and a second comparing part 233 configured to compare a signal output from the second light receiving sensor 222 with a criterion signal, and to output a corresponding signal.

When the signal transmitted from the first light emitting sensor 211 is blocked by the blocking part 233, the first light receiving sensor 212 enters an OFF state. In addition, when the impeller unit 230 rotates so that the blocking part 233 is not positioned at a space between the first light emitting sensor 211 and the first light receiving sensor 212, the signal transmitted from the first light emitting sensor is received by the first light receiving sensor 212, thus the first light receiving sensor 212 enters an ON state.

The controller 252 controls the switches 250 and 260 to be switched ON/OFF, when the switches 250 and 260 are switched ON, and the first light emitting sensor 211 and the second light emitting sensor 221 output signals.

Meanwhile, when the blocking part 233 is positioned between the first light emitting sensor 211 and the first light receiving sensor 212, or between the second light emitting sensor 221 and the second light receiving sensor 222, the first light receiving sensor 212 and the second light receiving sensor 222 enter OFF states so that predetermined signals (for example, a High signal) are respectively input to the comparing parts 213 and 223 as comparison signals.

Alternatively, when the blocking part 233 is not positioned between the first light emitting sensor 211 and the first light receiving sensor 212, nor between the second light emitting sensor 221 and the second light receiving sensor 222, the first light receiving sensor 212 and the second light receiving sensor 222 enter ON states so that predetermined signals (for example, a Low signal) are respectively input to comparing parts 213 and 223 as comparison signals.

In the above comparing parts 213 and 223, signals output from the first and second light receiving sensors 212 and 222 are input to respective input terminals (- terminal), and each of the comparing parts 213 and 223 output a "Low" signal when the signal input to the input terminal (- terminal) is higher than a criterion voltage of a criterion terminal (+ terminal) of the comparing part, and outputs a "High" signal when the signal input to the input terminal is lower than the criterion voltage.

Each of the comparing parts 213 and 223 is configured with a Schmitt trigger circuit that feeds back the output signal of each comparing part into resistors 215 and 225 of the criterion terminal (+ terminals) such that an error that may be generated between a blocking part and an opening part may be removed.

The above criterion voltage may be determined in a voltage that is divided in a voltage dividing part that divides an applied voltage. The voltage dividing part may be configured with at least two resistors R1 and R2 serially connected to the applied voltage, and values of the resistors may be selected such that the criterion voltage may be properly set according to fluid turbidity. In addition, any one of the resistors may be configured with a variable resistor so that the criterion voltage may be changed by adjusting the variable resistor according to fluid turbidity of a device for measuring a flow amount.

As shown in FIG. 4, one, three, or five blocking parts 233 may be provided as necessary.

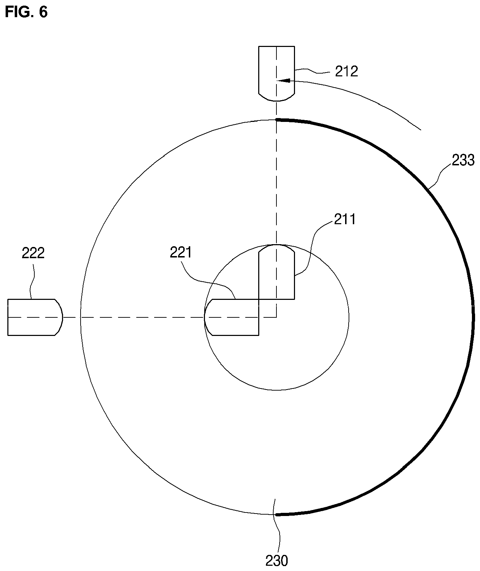

FIGS. 5 and 6 are view of an example when one blocking part is provided. Forward flowing in which fluid forwardly flows is set when the impeller unit rotates in a clockwise direction in the figure, and backward flowing in which fluid backwardly flows is set when the impeller unit rotates in a counterclockwise direction in the figure.

Fist, in FIG. 5, when one blocking part is provided and an impeller unit rotates in a clockwise direction (forward flowing), the second light receiving sensor 222 enters an OFF state at a point when the first light receiving sensor 212 is switched from an ON state to an OFF state.

In FIG. 6, one blocking part is provided and an impeller unit rotates in a counterclockwise direction (backward flowing), the second light receiving sensor 222 enters an ON state at a point when the first light receiving sensor 212 is switched from an ON state to an OFF state.

In the figure, a dark black line refers to a blocking part 233, and a fine line refers to an opening part.

In the present invention, for convenience of description, the blocking part and the opening part are described by separating them. However, the opening part may be used as the blocking part by forming the opening part of a transparent material so that an optical signal may pass.

Generally, when the blocking part is provided in one side, the center of gravity may change when the impeller unit rotates. Accordingly, the opening part in association with the blocking part may be formed of a transparent material to maintain a balance such that the impeller unit smoothly rotates.

In the blocking part 233, two pairs of sensors are provided inside and outside of the blocking part 233, a first pair which is the first light emitting sensor 211 and the first light receiving sensor 212, and a second pair which is the second light emitting sensor 221 and the second light receiving sensor 222 are positioned to be 90 degrees.

When a signal output from the first light emitting sensor 211 or the second light emitting sensor 221 is blocked by blocking part 233, the first light receiving sensor 212 or the second light receiving sensor 222 becomes an OFF state.

In addition, when the rotated blocking part 233 is not positioned at a space between the first light emitting sensor 211 and the first light receiving sensor 212, or between the second light emitting sensor 221 and the second light receiving sensor 222, a signal output from the first light emitting sensor 211 or the second light emitting sensor 221 is not received by the first light receiving sensor 212 or in the second light receiving sensor 222, thus the first light receiving sensor 212 or the second light receiving sensor 212 becomes an OFF state.

A period for detecting ON/OFF states of the first light receiving sensor 212 by switching ON the first light emitting sensor 211 is shorter than a half of a time required for passing between the first light emitting sensor 211 and the first light receiving sensor 212 by the blocking part 233 according to a rotation speed of the blocking part 233.

For example, when a time for one rotation of the blocking part is 64msec, a speed of the blocking part passing between the first light emitting sensor and the first light receiving sensor becomes 32msec. Herein, an ON/OFF period of the first light emitting sensor should be shorter than 16msec that is a half of the speed of the blocking part such that backward flowing may be easily detected.

In the present invention, an operation principle of the present invention is described by setting a time for one rotation of the blocking part to 64msec. By the above feature, when lengths of the blocking part and the opening part are 1:1, an ON/OFF period of the first light emitting sensor becomes the largest and power consumption of a battery becomes the smallest.

First, referring to FIG. 5, FIG. 5 shows forward flowing in which fluid or gas flows in a forward direction, and the blocking part 233 of the impeller unit rotates in a clockwise direction.

When a state where one rotation of the impeller unit is detected is set as a starting point from the opening part to the blocking part, one rotation is calculated from a point in which the first light receiving sensor 212 switches from an ON state to a point in which the first light receiving sensor 212 switched to an OFF state.

Referring to the figure, when fluid or gas rotates in a forward flowing direction which means that the fluid or gas flows in a forward direction, the second light receiving sensor 222 enters an OFF state at a point when the first light receiving sensor 212 is switched from an ON state to an OFF state.

Accordingly, when one blocking part is provided, the second light receiving sensor 222 enters an OFF state at a point when the first light receiving sensor 212 is switched from an ON state to an OFF state, thus the controller 252 may determine a rotation direction as forward flowing.

In addition, when one blocking part is provided, the first light receiving sensor 212 enters an OFF state at a point when the second light receiving sensor 222 is switched from an ON state to an OFF state, thus the controller 252 may also determined a rotation direction as forward flowing.

In other words, when any one of light receiving sensors is switched from an ON state to an OFF state, a rotation direction may be determined by determining a state of the other light receiving sensor at the moment of switching.

Referring to FIG. 6, when fluid or gas backwardly flows which means that fluid or gas flows in a backward direction, the blocking part 233 of the impeller unit rotates in a counterclockwise direction.

Similar to FIG. 5, when a state where one rotation of the impeller unit is detected, in other words, from a point in which the first light receiving sensor 212 is switched to an ON state to a point in which the first light receiving sensor 212 is switched to an OFF state is calculated one rotation.

The second light receiving sensor 222 enters an ON state at a point when the first light receiving sensor 212 is switched from an ON state to an OFF state.

In other words, whether the second light receiving sensor 222 is an ON state or OFF state is determined at a point when the first light receiving sensor 212 is switched from an ON state to an OFF state. When the second light receiving sensor 222 is an OFF state, a rotation direction is determined as a forward rotation, and when the second light receiving sensor 222 is an OFF state, the rotation direction is determined as a backward rotation.

In other words, when one blocking part is provided, a plurality of sensor pairs is used for measuring a usage amount and determining a rotation direction of a meter.

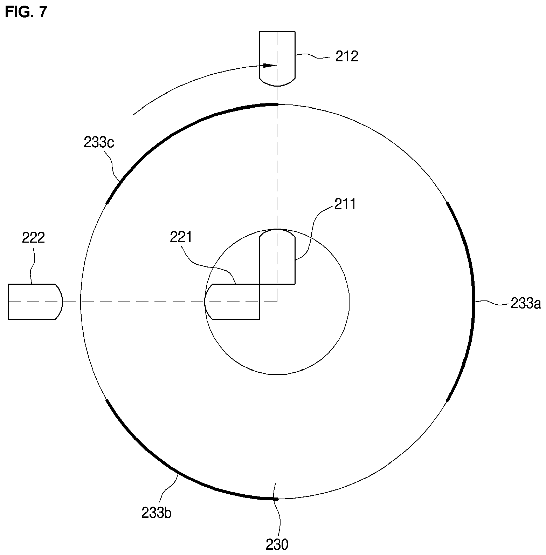

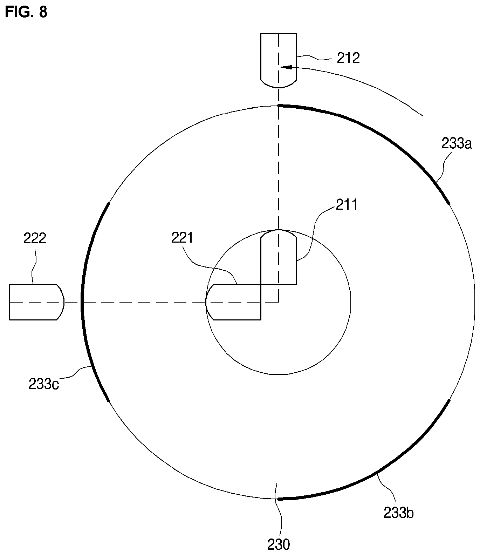

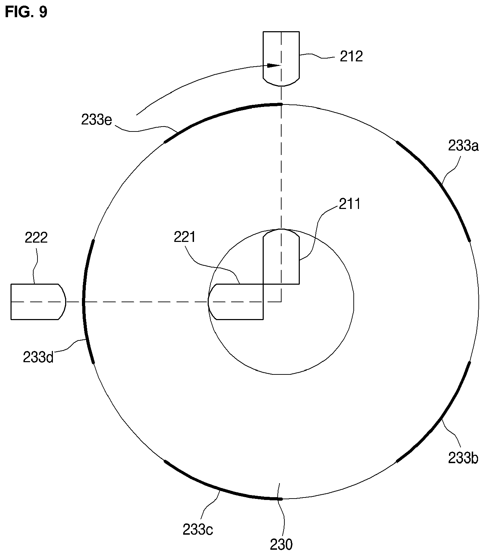

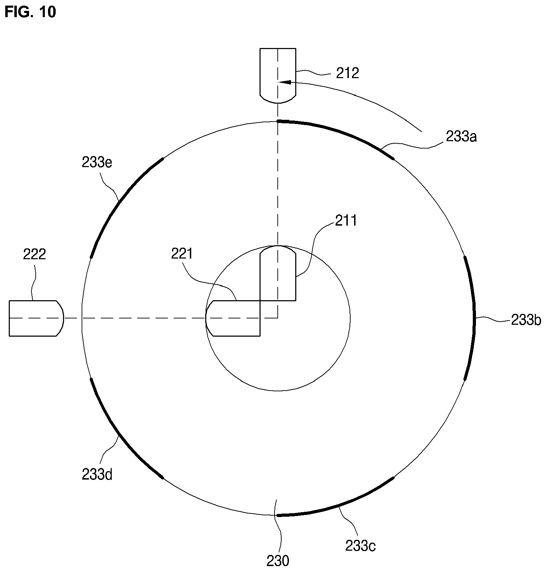

An example in which three blocking parts are provided is shown in FIGS. 7 and 8, and an example in which five blocking parts are provided is shown in FIGS. 9 and 10.

First, referring to FIGS. 7 and 8 showing views for illustrating a method of counting a number of rotations and setting a rotation direction of an example in which three blocking parts rotate in forward and backward directions, when three blocking parts are provided, and the impeller unit 230 rotates in a clockwise direction (forward flowing), the second light receiving sensor 222 becomes an ON state at a point when the first light receiving sensor 212 is switched from an ON state to an OFF state.

Referring to FIG. 8 showing a case of backward flowing, when the impeller unit rotates in a counterclockwise direction, the second light receiving sensor 222 enters an OFF state at a point when the first light receiving sensor 212 is switched from an ON state to an OFF state.

In addition, referring to FIG. 9 showing a case in which five blocking parts are provided, when the impeller unit 230 rotates in a clockwise direction (forward flowing), the second light receiving sensor 222 enters an OFF state at a point when the first light receiving sensor 212 is switched from an ON state to an OFF state.

In FIG. 10, when the impeller unit 230 rotates in a counterclockwise direction (backward flowing), the second light receiving sensor 222 enters an ON state at a point when the first light receiving sensor 212 is switched from an ON state to an OFF state.

Results of examples when one, three, and five blocking parts are provided are as shown in Table 1 below.

### Table 1

**[Table 1]**

| Sensor | When one blocking part is provided | | When three blocking parts are provided | | When five blocking parts are provided | |
|---|---|---|---|---|---|---|
| First light receiving sensor | From ON->OFF state | | From ON->OFF state | | From ON->OFF state | |
| Second light receiving sensor | OFF | ON | ON | OFF | OFF | ON |
| Result | Forward rotation | Backward rotation | Forward rotation | Backward rotation | Forward rotation | Backward rotation |

Referring to Table 1, a rotation direction of the impeller unit 230 may be determined by determining a state of the first light receiving sensor and the second light receiving sensor according to whether the second light receiving sensor 222 is an ON or OFF state at a point when the first light receiving sensor 212 is switched form an ON state to an OFF state.

In the present invention, for convenience of description, the first light receiving sensor is used for measuring a number of rotations, and the second light receiving sensor is used for detecting a rotation direction.

However, as described above, the above result is obtained since lengths of the blocking part and the opening part are 1:1 thereby power consumption of a battery becomes the lowest. Herein, lengths of the blocking part and the opening part which are formed on the impeller unit are identical for convenience of description, as described above.

In other words, when one blocking part is provided, a length of the blocking part and a length of the opening part become as much as a semi-circumference (in other words, 360 degrees/2= 180 degrees); when three blocking parts are provided, the opening part becomes also three, thereby a length of the blocking part becomes as much as 60 degrees (in other words, 360 degrees/6= 60 degrees); and when five blocking parts are provided, the opening part becomes also four, thereby a length of the blocking part becomes as much as 36 degrees (in other words, 360 degrees/10= 36 degrees).

However, in the present invention, two pairs of sensors are used for determining a rotation speed and a rotation direction, it is not limited that lengths of the opening part and the blocking part to be 1:1.

A position of second light emitting and receiving sensors may be determined by referencing Table 1 according to a length and a number of blocking parts.

In addition, when the above blocking part is used for a water flow meter, it is preferable to use one blocking part for the water flow meter and to use five blocking parts for a gas flow meter.

The controller 252 may transmit to the first light emitting sensor 211 a pulse signal having a period corresponding to a speed that is equal to or less than "1/(number of blocking partsx2)" of a maximum single rotation speed of the impeller unit, and may count a number of rotations of the impeller unit in a unit of a "1/(number of blocking parts)" per rotation by using an output signal of the first comparing part 213 which becomes ON and OFF whenever a signal output from the first light emitting sensor is blocked by the blocking part sot that the signal is not received by the first light receiving sensor 212 and the signal is received by the light receiving sensor 212 by passing an area where the blocking part is not present. According to a number of blocking parts, a 1/1, 1/3, and 1/5 rotation may be measured, thus a flow amount may be measured more accurately.

Hereinafter, a method of counting a number of rotations of a device for measuring a flow amount according to an embodiment of the present invention will be described with reference to the figure.

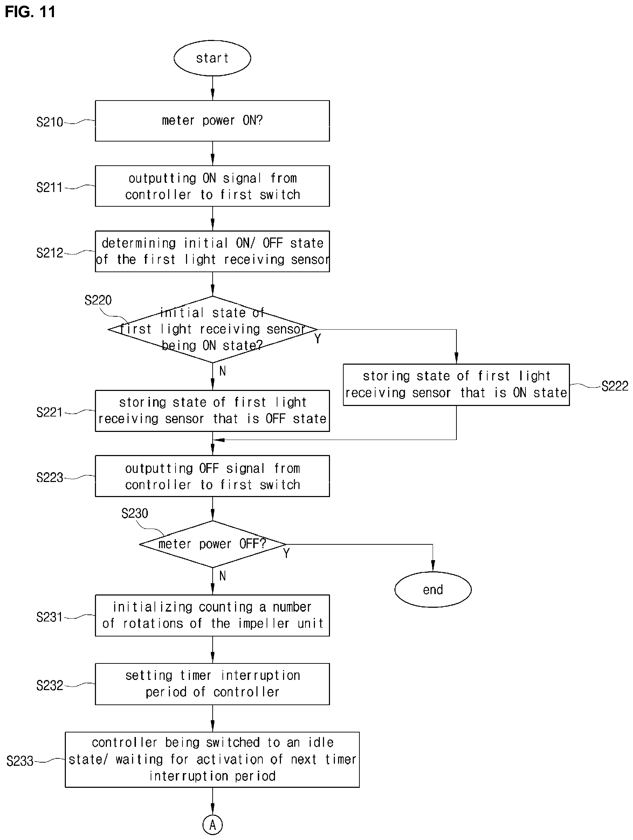

FIGS. 11 to 13 are view showing flowcharts for illustrating a method of measuring a usage amount and determining a flow direction of fluid or gas according to an embodiment of the present invention. As shown in the figure, in step S210, when a power of a meter becomes ON, in step S211, the controller 252 outputs an ON signal to the first switch 250 for driving the first light emitting sensor 211, thus the first switch 250 becomes ON so that a signal is output from the first light emitting sensor 211.

As the first light emitting sensor 211 outputs the signal, an initial state of the first light receiving sensor 212 is determined. In other words, when the signal output from the first light receiving sensor 212 is input to the first comparing part 213, the controller 252 determines whether a signal from the first light receiving sensor 212 is an ON state or an OFF state by using the signal output from the first comparing part 213.

In other words, before operating the meter, whether or not the blocking part 233 is positioned between the first light emitting and receiving sensors 211 and 212 is determined.

When the blocking part 233 is positioned between the fist light emitting and receiving sensors 211 and 212, the first light receiving sensor 212 enters an OFF state. Accordingly, the output signal of the first comparing part 250 becomes LOW, and when the blocking part 233 is not positioned between the fist light emitting and receiving sensors 211 and 212, the first light receiving sensor 212 enters an ON state thereby the output signal of the first comparing part 250 becomes High.

Accordingly, in step S212, an initial ON/OFF state of the first light receiving sensor 212 may be determined according to a position of the blocking part 233.

When an initial state of the first light receiving sensor 212 is an ON state in step S220, in step S222, the initial state of the first light receiving sensor 212 which is an ON state is stored in a memory 251 of the controller 252. Alternatively, when the initial state of the first light receiving sensor 212 is an OFF state, in step S221, the initial state of the first light receiving sensor 212 which is an OFF state is stored in a memory 251.

Then, in step S223, the controller 252 outputs an OFF signal to the first switch 250 for stopping driving of the first light emitting sensor 211, thus the first switch 250 becomes OFF, and the first light emitting sensor 211 stops outputting the signal.

Then, in step S230, whether or not the power of the meter is OFF is determined.

In step S230, when the power of the meter is not OFF, in step S231, the controller 252 initialize counting a number of rotations of the impeller unit, in step S232, sets a timer interruption period, and switches to an idle state.

In step S233 that is an idle state, the idle state may be a state that is activated by an interruption after elapsing a predetermined time (period), the interruption being caused by a timer or an external signal.

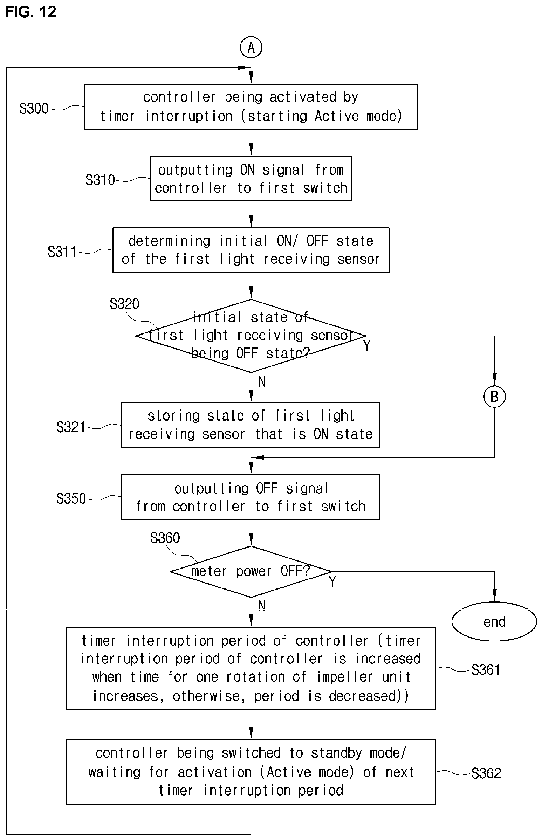

Referring to FIG. 12, in step S300, the controller 252 may be activated when a preset predetermined times has elapsed (timer interruption) or by an external periodic signal (external interruption).

In step S300, when the controller 252 is activated, in step S310, the controller 252 outputs an ON signal to the first switch 250 for driving the first light emitting sensor 211, thus the first switch 250 is switched ON and the first light emitting sensor 211 outputs a signal.

As the first light emitting sensor 211 outputs the signal, in step S311, whether the first light receiving sensor 212 is an ON state or in an OFF state is determined. In other words, according to whether or not the blocking part 233 is currently positioned between the first light emitting and receiving sensors 211 and 212, in steps S320 and S321, whether a signal currently input from the first comparing part 250 to the controller 252 is an ON state or OFF state is determined, and an ON state of the light receiving sensor is stored in the memory 341.

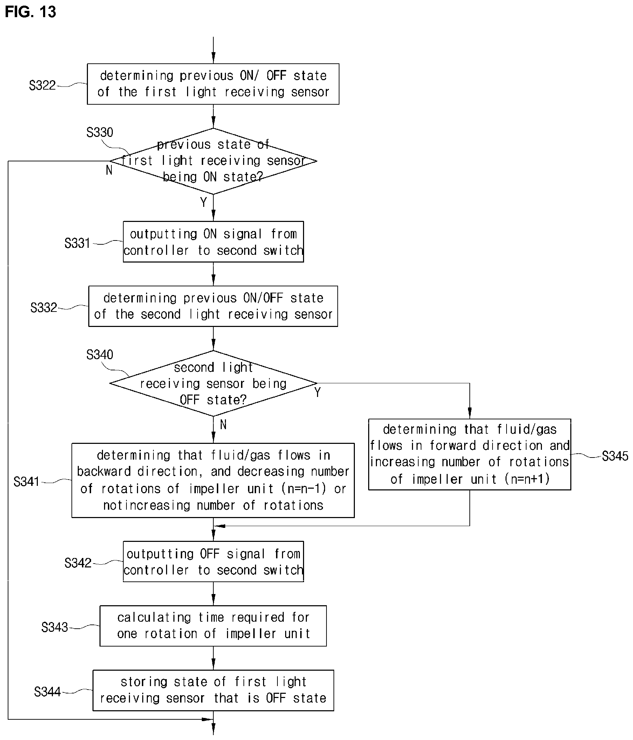

In step S320, when the output signal of the first light receiving sensor 212 is an OFF state, a step "B" of FIG. 13 is processed.

FIG. 13 shows a flowchart illustrating a method of detecting a rotation direction of the impeller unit. First, in step S322, whether a previous state of the first light receiving sensor 212 is an ON state or an OFF state is determined.

Herein, "the previous state of the first light receiving sensor 212" means the state of the first light receiving sensor 212 which is stored in the memory 251 in step S211 or S222 of FIG. 11 when a first interruption is performed.

In step S330, whether or not the first light receiving sensor 212 is an ON state is determined, and in step S331, the controller 252 outputs an ON signal to the second switch 260 when the first light receiving sensor 212 is an ON state.

After outputting the ON signal to the second switch 260 in step S331, in step S332, whether the second light receiving sensor 222 is an ON state or an OFF state is determined.

In step S340, whether or not a signal output from the second light receiving sensor 222 is an OFF state is determined When the signal is an OFF state, in step S345, a flow direction of the flow meter is detected as a forward direction (forward flowing), and a counter for measuring a number of rotations of the impeller unit is increased (n=n+1).

In other words, in step S345, the counter is increased since the flow direction is a forward direction.

When the second light receiving sensor is determined as an ON state in step S340, in step S341, the flow direction of the flow meter is detected as a backward direction (backward flowing), the counter for measuring the number of rotations of the impeller unit is decreased (n=n-1), or may not be counted.

After steps S355 and S341, in step S343, the controller 252 outputs an OFF signal to the second light emitting sensor 221, in step S343, calculates a time required for one rotation of the impeller unit, and in step S344, stores the state of the first light receiving sensor which is an OFF state in the memory 251.

After the steps S321 and B, in step S350, the controller 252 outputs an OFF signal to the first switch 250, and in step S360, determines whether or not the power of the meter is an OFF state.

When the power of the meter is an OFF state in step S360, the method of detecting the rotation direction of the impeller unit is ended. When the power of the meter is not an OFF state, in step S361, the controller 252 sets a timer interruption period.

In other words, when the time required for one rotation of the impeller unit increases, in step S361, the controller 252 increases the timer interruption period r, when the time decreases, the controller 252 decreases the timer interruption period.

Then, in step S362, the controller 252 is switched to a standby mode state, and waits that a next timer interruption period to be activated.

According to the measuring method for the meter as described above, since a number or rotations of the impeller unit is counted when the first light receiving sensor 212 is switched from an OFF state to an ON state, or from an ON state to an OFF state by determining a state of the first light receiving sensor 212, thus the number of rotations may be accurately increased by 1 when the impeller unit rotates one time.

In addition, by using the first comparing part 213 having a hysteresis characteristic, when fluid is turbid so that an output signal of the first light receiving sensor 212 becomes weak or becomes a middle state between the blocking part and the opening part, the number of rotations may be accurately counted in the first comparing part 250.

In addition, since a state of the first light receiving sensor 212 is checked by switching ON the first light emitting sensor 211 for a predetermined short time period, and a state of the second light receiving sensor 212 is checked by switching ON the second light receiving sensor 212 for a predetermined short time when necessary, time for current consumption due to two pairs of light emitting and receiving sensors becomes short, thus the two pairs of light emitting and receiving sensors are very effective when they are used in a meter using a battery.

In the present invention, in order to solve the problem in which a life of a battery is reduced by unnecessary current consumption generated when fluid or gas slowly flows, a period for detecting a sensor is variably set by setting a sensor detection ON/OFF period to be short when fluid or gas rapidly flows, and setting the sensor detection ON/OFF period to be large when fluid or gas slowly flows, thus battery consumption may be remarkably reduced.

In other words, a variable pulse may be used for a fluid or gas usage amount measuring method using an optical sensor, and by using the same, power consumption may be reduced wile an accurate usage amount is measured within fluid or gas by varying a sensing period. Current consumption consumed for the sensor detection may be reduced by reducing a sensor detection period when fluid or gas flows through the meter quickly, and by increasing the sensor detection period when fluid or gas flows slowly.

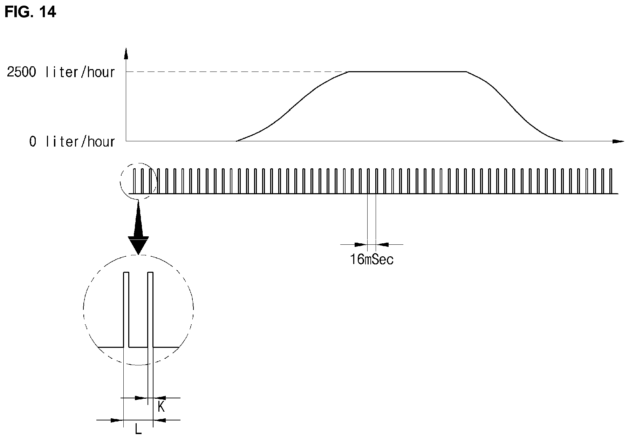

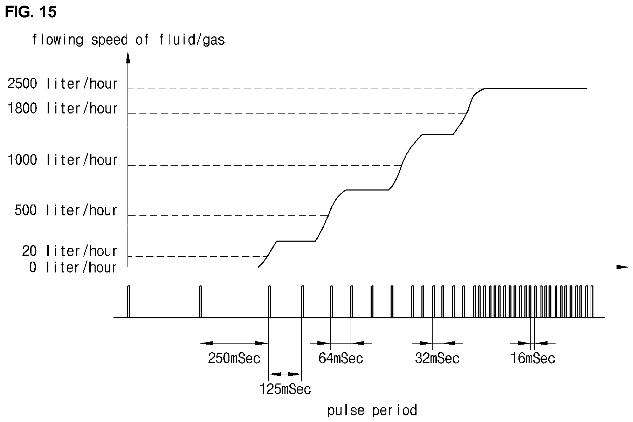

FIG. 14 is a view showing a case when an ON/OFF period of a first senor 211 is fixed to 16msec, and FIG. 15 is a view showing when an ON/OFF period of the first light emitting sensor is set to 16msec and a fluid speed is 2500 liter/hour, and an ON/OFF period is adjusted to 250msec when the fluid speed becomes close to 0.

In the figure, L is an ON/OFF period of the first light emitting sensor 211, and K is an ON timing length of the first light emitting sensor 211.

Herein, an example of using a variable pulse and a fixed pulse will be described by comparing current consumptions thereof.

When a current consumption of a light emitting sensor is set to 2 volts /200Ω = 10mA, and a current consumption of a light receiving sensor is set to 3 volts / 1000Ω = 3mA, and among the entire day (24 hours), the device is set to be operated in a maximum fluid speed (1600 liter/hour) for 6 hours, in a medium fluid speed (320 liter/hour) for 4 hours, and in a low fluid speed (16 liter/hour) for 16 hours, current consumption of the device using a fixed pulse is as below.

Referring to FIG. 14, when a period (L) is 16msec, and a sensor ON time (K) is 50µSec, the consumed quantity of electric charge of the sensors per day becomes 13mA x 50*µ*s/16000µSec x 24hour = 0.975 mAh, thus the current consumption of the sensors per year becomes 0.975 x 365 days = 355.9 mAh.

Under the same condition, when a variable pulse is used, referring to the consumed quantity of electric charge of the sensors (FIG. 15), a period (L) becomes 16msec when a flow speed is high (2500liter/hour), 64msec when the flow speed is medium (500∼1000liter/hour), and 250msec when the flow speed is low or when the device is not used, and a sensor ON time (K) becomes 50µSec.

Herein, the consumed quantity of electric charge of the sensors per day is as below.

A current consumption during a high speed (6 hours) becomes "13mA x 50µSec/16000µSec x 6hour = 0.2438 mAh", a current consumption during a middle speed (4 hours) becomes "13mA x 50µSec/64000µSec x 4hour = 0.0407 mAh", and a current consumption during a low speed (or not being used)(14 hours) becomes "13mA x 50µSec/250000µSec x 14hour = 0.0364 mAh", thus the consumed quantity of electric charge of the sensors per year becomes "0.2438+0.0407+0.0364) x 365days = 117.13 mAh".

Herein, for a battery using 1200mAh capacity, when a fixed pulse is used, "1200mAh / 355.9 mAh = 3.37 years" may be used, and when a variable pulse is used, "1200mAh / 117.13 mAh = 10.25 years" may be used, thus a period of use becomes triple.

As described above, when a rotation speed of the impeller unit becomes fast (or high?), a period of a pulse signal of each light emitting sensor becomes short, and when the rotation speed of the impeller unit becomes slow, the period of the pulse signal of each light emitting sensor becomes large. Accordingly, current consumed for detecting sensors is reduced thus the battery integrated in the meter will be used for long time.

In the above description, a number of rotations and a rotation direction are detected according to an output signal of a second sensor at a point when a first sensor is switched from an ON state to an OFF state, but the number of rotations and the rotation direction may be also detected based on at point when the first sensor is switched from an OFF state to an ON state.

Accordingly, in the present invention, an accurate usage amount may be measured by providing two pairs of sensors are provided to be perpendicular and detecting backward flowing, and battery consumption may be improved by using a variable pulse according to a rotation speed.

Hereinabove, although the present invention has been described in detail with reference to the exemplary embodiments, it will be obvious to those skilled in the art that various modifications and alterations may be made without departing from the scope and spirit of the present invention. It should be understood that these modifications and alterations fall within the scope defined by the following claims.

### Industrial applicability

The present invention may be used for a meter for measuring a usage amount of fluid or gas, and may be used for industrial field of measuring an amount of gas or water used in home, buildings, offices, etc.

## Claims

1. A device for measuring a usage amount and determining a flow direction of fluid or gas, the device comprising:
a first sensing part including a first light emitting sensor and a first light receiving sensor;
a second sensing part including a second light emitting sensor and a second light receiving sensor;
a body part through which gas or fluid flows thereinside, and in which the first sensing part and the second sensing part are provided in one side thereof;
an impeller unit provided to rotate by fluid or gas flowing through the body part;
at least one blocking part rotating in association with the rotation of the impeller unit, and rotating between the first light receiving sensor and the first light emitting sensor, and between the second light receiving sensor and the second light emitting sensor; and
a controller transmitting a pulse signal to the first light emitting sensor and counting a number of rotations of the impeller unit by using an ON/OFF signal detected from the first light receiving sensor, the OFF/OFF signal of the first light receiving sensor being output according to whether or not a signal output from the first light emitting sensor is blocked by the rotation of the blocking part, and transmitting a pulse signal to the second light emitting sensor and determining a rotation direction by using an ON/OFF signal detected from the second light receiving sensor, the ON/OFF signal of the second light receiving sensor being output according to whether or not a signal output from the second light emitting sensor is blocked by the rotation of the blocking part.

2. The device of claim 1, wherein the controller determines whether the impeller unit rotates in a forward direction or in a backward direction by using the signal of the second light receiving sensor when a state of the signal of the first light receiving sensor is switched.

3. The device of claim 1, wherein the first sensing part and the second sensing part are installed to be perpendicular to each other based on a rotation center of the blocking part.

4. The device of claim 1, wherein the impeller unit is configured such that a border length of an upper surface of the impeller unit from which the blocking part upwardly extends and a remaining border length thereof in which the blocking part is not provided are identical.

5. The device of claim 1, wherein the controller transmits to the first light emitting sensor a pulse signal having a period corresponding to a speed that is equal to or less than a "1/(number of blocking parts x2)" of a maximum speed for one rotation, and counts a number of rotations of the impeller unit in a unit of "1/(number of blocking parts)" per rotation by using a signal that becomes ON and OFF whenever the blocking part passes an area in which the signal is not received by the first light receiving sensor by the blocking part, and an area in which the signal is received by the first light receiving sensor.

6. The device of claim 5, wherein the controller switches ON the first light emitting sensor and sets a period for detecting whether the first light receiving sensor is an ON or OFF state to be shorter than a 1/2 of a time required for passing the first light emitting sensor and the first light receiving sensor by the blocking part according to a rotation speed of the blocking part.

7. The device of claim 1, further comprising a comparing part including a Schmitt trigger circuit having a hysteresis characteristic, the Schmitt trigger circuit outputting an ON/OFF OFF signal by comparing a signal output from any one of the first light receiving sensor and the second light receiving sensor with a criterion signal, and feeding back the output signal thereof to a criterion terminal thereof.

8. The device of claim 1, wherein the controller transmits the pulse signal to at least one of the first light emitting sensor and the second light emitting sensor by adjusting a period of the pulse signal according to a rotation speed of the impeller unit.

## Amended claims

### Amended claims under Art. 19.1 PCT

**1.** (Canceled)

**2.** (Amended)
A device for measuring a usage amount and determining flow direction of fluid or gas, the device comprising:
a first sensing part including a first light emitting sensor and a first light receiving sensor;
a second sensing part including a second light emitting sensor and a second light receiving sensor;
a body part through which gas or fluid flows thereinside, and in which the first sensing part and the second sensing part are provided in one side thereof;
an impeller unit provided to rotate by fluid or gas flowing through the body part;
at least one or an odd number of blocking parts rotating in association with the rotation of the impeller unit, and rotating between the first light receiving sensor and the first light emitting sensor, and between the second light receiving sensor and the second light emitting sensor; and
a controller transmitting a pulse signal to the first light emitting sensor and counting a number of rotations of the impeller unit by using an OFF/OFF signal detected from the first light receiving sensor, the OFF/OFF signal of the first light receiving sensor being output according to whether or not a signal output from the first light emitting sensor is blocked by the rotation of the blocking part, transmitting sensor a pulse signal to the second light emitting and determining whether a rotation direction of the impeller unit is a forward direction or a backward direction by using an ON/OFF signal detected from the second light receiving sensor, the ON/OFF signal of the second light receiving sensor being output according to whether or not a signal output from the second light emitting sensor is blocked by the rotation of the blocking part, and according to the signal of the second light receiving sensor when a state of the signal of the first light receiving sensor is switched,
wherein
the impeller unit is configured such that a border length of an upper surface of the impeller unit from which the blocking part upwardly extends and a remaining border length thereof in which the blocking part is not provided are identical, and
the controller transmits the pulse signal to at least one of the first light emitting sensor and the second light emitting sensor by adjusting a period of the pulse signal according to a rotation speed of the impeller unit.

**3.** (Amended) The device of claim 2, wherein the first sensing part and the second sensing part are installed to be perpendicular to each other based on a rotation center of the blocking part.

**4.** (Canceled)

**5.** (Amended) The device of claim 2, wherein the controller transmits to the first light emitting sensor a pulse signal having a period corresponding a speed that is equal to or less than a "1/(number of blocking parts x2)" of a maximum speed for one rotation, and counts a number of rotations of the impeller unit in a unit of a "1/(number of blocking parts)" per rotation by using a signal that becomes ON and OFF whenever the blocking part passes an area in which the signal is not received by the first light receiving sensor by the blocking part, and an area in which the signal is received by the first light receiving sensor.

**6.** The device of claim 5, wherein the controller switches ON the first light emitting sensor and sets a period for detecting whether the first light receiving sensor is an ON or OFF state to be shorter than a 1/2 of a time required for passing the first light emitting sensor and the first light receiving sensor by the blocking part according to a rotation speed of the blocking part.

**7.** (Amended) The device of claim 2, further comprising a comparing part including a Schmitt trigger circuit having a hysteresis characteristic, the Schmitt trigger circuit outputting an ON/OFF signal by comparing a signal output from any one of the first light receiving sensor and the second light receiving sensor with a criterion signal, and feeding back the output signal thereof to a criterion terminal thereof.

**8.** (Canceled)
